# EUROPÄISCHE PATENTSCHRIFT

(11) **EP 3 969 643 B1**
(45) Veröffentlichungstag und Bekanntmachung des Hinweises auf die Patenterteilung: **15.11.2023**
(21) Anmeldenummer: 20726101.7
(22) Anmeldetag: 14.05.2020
(51) Int. Cl.: D04H 3/013, D01D 4/04, D01F 2/00, D01D 5/14

(54) **VERFAHREN UND VORRICHTUNG ZUR DÜSENREINIGUNG WÄHREND DER HERSTELLUNG VON CELLULOSISCHEM SPINNVLIES**
METHOD AND DEVICE FOR NOZZLE CLEANING DURING THE PRODUCTION OF CELLULOSE NONWOVEN WEB
PROCÉDÉ ET DISPOSITIF DE NETTOYAGE DES BUSES LORS DE LA FABRICATION DE NON-TISSÉ CELLULOSIQUE

(30) Priorität: 17.05.2019 EP 19175076
(43) Veröffentlichungstag der Anmeldung: 23.03.2022
(73) Patentinhaber: Lenzing Aktiengesellschaft, 4860 Lenzing (AT)
(72) Erfinder: SAGERER-FORIC, Ibrahim, 4840 Vöcklabruck (AT); MALZNER, Markus, 4841 Ungenach (AT); GSCHWANDTNER, Matthias, 4864 Attersee (AT)
(74) Vertreter: Nemec, Harald
(86) Internationale Anmeldenummer: PCT/EP2020/063519
(87) Internationale Veröffentlichungsnummer: WO 2020/234122

(56) Entgegenhaltungen:
- WO-A1-94/28211
- WO-A1-2019/068764
- DD-A1- 215 590

## Beschreibung

Die Erfindung betrifft ein Verfahren für die Reinigung von Spinnvliesdüsen während der Herstellung von cellulosischem Spinnvlies.

Des Weiteren betrifft die Erfindung eine Vorrichtung für die Reinigung von Spinnvliesdüsen während der Herstellung von cellulosischem Spinnvlies.

### Hintergrund der Erfindung

Seit einigen Jahrzehnten werden verschiedene Verfahren mit unterschiedlichen Düsen verwendet, um aus unterschiedlichen Polymerschmelzen und Lösungen feine Fasern und Filamente dadurch herzustellen, dass die aus der Düse extrudierten Filamente mithilfe eines heißen Gasstroms, der im wesentlichen parallel zur Extrusionsrichtung orientiert ist, verstreckt werden. Die so hergestellten Fasern bzw. Filamente können dann als Vliesstoff auf einer perforierten Oberfläche, beispielsweise auf einer Trommel oder einem Förderband, abgelegt werden. Je nach Verfahren und verwendetem Polymer wird der hergestellte Vliesstoff danach entweder direkt aufgewickelt, oder zuerst nachbehandelt, bevor er dann als Rolle aufgewickelt und für den Verkauf konfektioniert wird. Um die Produktionskosten weiter zu senken, sind die Steigerung des Durchsatzes und die Reduktion des Energiebedarfs bei zumindest gleichbleibender Vliesstoffqualität, die größten Optimierungsbereiche der Spinnvliesindustrie.

Als Rohstoffe können, wie in US3543332 und DD215590A1 beschrieben, beispielsweise Polyolefine, Polyamide, Polyester, Polyvinylacetat, Celluloseacetat und viele weitere schmelzbare oder lösliche Stoffe verwendet werden. Es wurden auch Verfahren für die Herstellung von Spinnvliesen aus Lyocell-Spinnmasse, wie in US6306334, US8029259, WO94/2821 1A1 und US7922943 beschrieben, entwickelt. Als weiteres Beispiel wird in US7939010 die Herstellung von Spinnvliesen aus Stärke beschrieben. Da die verwendeten Rohstoffe sich in ihren Eigenschaften, speziell in der Rheologie, teilweise sehr unterscheiden, erhöht sich der Anspruch an die Flexibilität und an die Anpassbarkeit des Düsendesigns.

Die bis jetzt für die Herstellung von Spinnvliesstoffen nach dem Meltblown-Verfahren verwendeten Düsen, können grob in einreihige- und mehrreihige Düsen unterteilt werden.

Einreihige Düsen, wie in US3825380 beschrieben, können zwar für die Herstellung von Spinnvliesstoffen aus Schmelzen und Lösungen verwendet werden, aber je nach Viskosität der Schmelze bzw. der Lösung kann der Druckverlust sehr hoch und der maximale Durchsatz dadurch sehr gering sein. Um den Bedarf nach feineren Fasern und höheren Durchsätzen zu decken, wurden zwar wie in US6245911 und US7316552 beschrieben, auch Weiterentwicklungen an der einreihigen Düse vorgenommen, aber das Design stößt geometrisch und fertigungstechnisch bereits an seine Grenzen. Beispielsweise wurde im Laufe der Entwicklung der Abstand zwischen den Extrusionskapillaren immer weiter verringert, um den Durchsatz pro Düse zu erhöhen, sowie die Gefahr für Spinnfehler im Betrieb zu senken. Der Durchsatz einer einreihigen Düse liegt, je nach verwendeter Schmelze bzw. Lösung und gewählten Betriebsparametern, bei 10 kg/h/m bis 100 kg/h/m.

Um den Durchsatz zu erhöhen, wurde die in US4380570 beschriebene mehrreihige Nadel-Düse entwickelt. Dabei wird die Schmelze bzw. Lösung durch eine Düse mit mehreren Reihen und Spalten über Hohlnadeln extrudiert. Durch das entstandene Nadelfeld kann der Durchsatz pro Düse, im Vergleich zu einreihigen Düse, erhöht werden.

Die WO 2019/068764 beschreibt eine neue Art von Düsen mit einer Mehrzahl von in zumindest zwei hintereinanderliegenden Reihen angeordneten Extrusionskapillaren, wobei die Extrusionskapillaren in aus einer Grundplatte herausragenden und mit dieser Grundplatte einstückig ausgebildeten Extrusionssäulen angeordnet sind. Diese Art von Düse wird im Folgenden als "Säulendüse" bezeichnet.

Wie bereits beschrieben, wurde viel Aufwand in Design und Fertigung von Spinnvliesdüsen investiert um den Durchsatz pro Spinnvliesdüse zu erhöhen. Unabhängig von der gewählten Spinnvliesdüsen-Technologie soll die Spinnvliesdüse aber auch fehlerfrei funktionieren und die Betriebszeit pro Spinnvliesdüse soll so lange wie möglich sein.

Sogar wenn die wichtigen Parameter wie Schmelze bzw. Spinnmassetemperatur, Primärlufttemperatur, Schmelze- bzw. Spinnmasseverteilung und Spinndruck gleichmäßig sind, kann es aufgrund von Unreinheiten im Rohstoff, in der Schmelze bzw. Spinnmasse zu Extrusionsfehlern, Abrissphänomenen der Filamente, Aufbau von kurzkettigen Makromolekülen beim Extrusionsaustritt oder Ablagerungen von Schmelze oder Spinnmasse rund um die Primärluftaustrittslöcher kommen. Die genannten Fehler finden sich dann im Spinnvlies als Loch oder "Shot" wieder. Wenn die Verschmutzung auf der Spinnvliesdüse mit der Zeit anwächst, da sich die Extrusionslöcher gegenseitig stören und die Spinnvliesdüse zuwächst, dann muss die Anlage abgestellt werden, was zu einem Produktionsausfall führt.

Die Düse wird dann ausgebaut und im Falle von Spinnvliesdüsen für die Verarbeitung von Kunststoffschmelzen - wie in US3485670, US3865628 und JP2009155769 beschrieben - durch Pyrolyse oder Hydrolyse gereinigt.

Auch im Falle von Lyocell-Spinndüsen für die Herstellung von Stapelfasern gibt es Anleitungen zum Reinigen der Düsen (US5415697), und es gibt auch sowohl für Kunststoffschmelzen, als auch für cellulosische Spinnmassen Filtrationsvorrichtungen (US6033609), um Unreinheiten in der Schmelze bzw. Spinnmasse bei der Extrusion der Filamente zu verhindern und damit die Spinnstabilität zu erhöhen. Doch je feiner der Filter gewählt wird, desto schneller verstopft er und baut einen hohen Druckverlust auf. Schließlich muss dann die Düse wieder abgeschaltet und ausgebaut werden, da der Filter gewechselt werden muss, was wiederum zu einem Produktionsausfall führt.

Da die Rohstoffe bei der Spinnvliesherstellung aus Kunststoffschmelzen synthetisch hergestellt wurden und sowohl die Reinheit, als auch die Molekulargewichtsverteilung kontrolliert werden können, werden durch vorherige Reinigung und Kontrolle der Düsenlöcher, ständige Prozesskontrolle und Filter vor der Düse gute Düsenbetriebszeiten erreicht. Falls ein Extrusionsloch trotzdem Spinnfehler produziert, wird es dauerhaft gestopft, oder die komplette Spinnvliesdüse wird - wie bereits beschrieben - zerlegt und gereinigt.

Im Falle der Herstellung von Spinnvlies aus cellulosischer Spinnmasse handelt es sich um einen natürlichen Rohstoff, bei dem sowohl die Molekulargewichtsverteilung, wie auch der Grad an Kontaminationen im Zellstoff während der Produktion stark variieren. Im Gegensatz zur Herstellung von Kunststoff-Spinnvliesen, bei dem aus einer Menge an Schmelze auch annähernd so viel Spinnvlies entsteht, muss bei der Herstellung von cellulosischen Spinnvliesen ca. 10-mal so viel Spinnmasse verarbeitet werden, um auf die gleiche Produktivität zu kommen. Da Spinnmassen üblicherweise Lösungen mit 3 % bis 17 % Massenanteil an Cellulose sind, ist der Anspruch an Durchsatz pro Düse, Gesamtdurchsatz einer Spinnvliesanlage, Spinnstabilität der Spinnvliesdüsen und Betriebszeit einer Düse höher, als bei den bisher bekannten Technologien bei der Kunststoff-Spinnvliesherstellung.

Beim Betrieb einer Spinnvliesdüse für die Herstellung von cellulosischen Spinnvliesen können immer wieder Extrusions- und Spinnfehler auftreten, was dazu führt, dass Spinnmasse auf der Extrusionsseite der Düse bzw. in der Umgebung der Primärluftaustrittsöffnungen kleben bleibt. Dadurch wird der Primärluftstrom gestört und es werden ungünstige Turbulenzen unterhalb der Spinnvliesdüse erzeugt.

Das führt weiter dazu, dass auch benachbarte Extrusionslöcher gestört werden und auch dort Spinnfehler entstehen, die entweder als "Shot" im Produkt landen oder sich an der Düsenoberfläche anlagern.

Wenn die Düsenoberfläche zu sehr verschmutzt ist, dann muss die Spinnvliesdüse abgestellt und gereinigt werden. Im Lauf der Zeit wird auch die Qualität der Produkte beeinträchtigt, da bei steigendem Verschmutzungsgrad der Spinnvliesdüse auch mehr Spinnfehler im Produkt zu sehen sind.

### Kurzbeschreibung der Erfindung

Aufgabe der vorliegenden Erfindung ist es daher, die Betriebszeit einer Spinnvliesdüse zu verlängern und die Produktivität einer Anlage für die Herstellung von cellulosischem Spinnvlies zu verbessern.

Die Aufgabe wird gelöst durch ein Verfahren für die Reinigung einer Spinnvliesdüse zur Herstellung von cellulosischem Spinnvlies aus einer Lösung von Cellulose in einem wässrigen organischen Lösungsmittel mittels Extrusion der Lösung durch Düsenlöcher der Spinnvliesdüse zur Bildung von Filamenten und Verstrecken der Filamente in Extrusionsrichtung mittels eines Gasstroms, bei welchem Verfahren an der Oberfläche der Spinnvliesdüse Cellulose enthaltende Verschmutzungen anfallen, umfassend die Schritte:
a. Besprühen der Verschmutzung mittels eines die Cellulose ausfällenden wasserhaltigen Fluids
b. Ablösen und Abtransport der Verschmutzung mittels des Gasstroms.

Weiters wird die Aufgabe durch eine Vorrichtung zur Durchführung des erfindungsgemäßen Verfahrens während des laufenden Herstellungsverfahrens und ohne Unterbrechung desselben gelöst, umfassend eine Sprühvorrichtung, umfassend zumindest eine Sprühdüse für die Aufbringung des die Cellulose ausfällenden wasserhaltigen Fluids auf die Oberfläche der Spinnvliesdüse.

Bevorzugte Ausführungsformen sind in den Unteransprüchen angeführt.

### Kurzbeschreibung der Figuren

- Fig. 1: zeigt eine Ausführungsform der erfindungsgemäßen Vorrichtung unter der Spinnvliesdüse in Seitenansicht
- Fig. 2: zeigt zwei Ausführungsformen der erfindungsgemäßen Vorrichtung in Frontalansicht
- Fig. 3: zeigt perspektivisch die Funktion einer Ausführungsform des erfindungsgemäßen Verfahrens
- Fig. 4: zeigt eine Ausführungsform des erfindungsgemäßen Verfahrens mit in Serie geschalteten Spinnvliesdüsen in Seitenansicht
- Fig. 5: zeigt schematisch den Ablauf einer Ausführungsform des erfindungsgemäßen Verfahrens

### Detaillierte Beschreibung der Erfindung

Mit der vorliegenden Erfindung werden ein Verfahren und eine Vorrichtung bereitgestellt, welche die Betriebszeit einer Spinnvliesdüse verlängern und die Produktivität einer Anlage für die Herstellung von cellulosischem Spinnvlies verbessern können.

Das erfindungsgemäße Verfahren ermöglicht insbesondere die Reinigung der Düsenoberfläche von Spinnvliesdüsen mithilfe der erfindungsgemäßen Vorrichtung während des laufenden Betriebs.

Das erfindungsgemäße Verfahren kann für die Reinigung von Spinnvliesdüsen für die Herstellung von Spinnvliesen aus Spinnmassen, bei welchen Cellulose gelöst wurde, verwendet werden.

Am Beispiel der Herstellung von cellulosischen Spinnvliesen ergeben sich aufgrund des erfindungsgemäßen Verfahrens zahlreiche Verbesserungen und Vorteile in Hinblick auf Wirtschaftlichkeit der Produktionsanlage, Betrieb der Anlage, Produktqualität und Arbeitssicherheit, da die Anlagenverfügbarkeit höher ist und die Spinnvliesdüsen seltener ausgebaut und gereinigt werden müssen.

Erfindungsgemäß wird ein unerwarteter Abreinigungseffekt erzielt, indem ein Cellulose ausfällendes wasserhaltiges Fluid entweder gezielt auf die Verschmutzungen an der Spinnvliesdüsenoberfläche oder flächendeckend in den Bereich der Verschmutzung gesprüht wird. Es hat sich gezeigt, dass sich dadurch kurzzeitig noch mehr Verschmutzungen an der Spinnvliesdüse bilden. Es entstehen kurzzeitig auch mehr Extrusions- und Spinnfehler durch die Besprühung. Nun besteht die Verschmutzung aber im Wesentlichen aus extrudierter Spinnmasse (also Celluloselösung). Durch das Besprühen koaguliert die Cellulose aus der Verschmutzung/Spinnmasse aus und bildet einen festen Film bzw. Belag auf der Spinnvliesdüse. Dieser wird nach kurzer Zeit mit einem Mal durch den aus der Spinnvliesdüse austretenden Gasstrom mitgerissen und von der Spinnvliesdüsenoberfläche abgerissen. Die Spinnvliesdüsenoberfläche wird somit schlagartig gereinigt.

Die Art und Weise der Gassstromerzeugung, die bei den oben beschriebenen Typen von Spinnvliesdüsen variieren kann, ist dabei für die Durchführung des erfindungsgemäßen Verfahrens nicht von Bedeutung.

Sämtliche weiter oben beschriebenen Typen von Spinnvliesdüsen weisen Primärluftaustrittsöffnungen und eine jeweils individuelle Führung des Gasstroms aus, die jedoch alle das erfindungsgemäße Reinigungsprinzip ermöglichen.

Vorteilhafterweise muss die Spinnvliesdüse aufgrund des erfindungsgemäßen Verfahrens deutlich seltener gewechselt werden. Daher verlängert sich die Betriebszeit der Spinnvliesdüse und die Produktivität einer Produktionsanlage erhöht sich.

Die Betriebszeit einer Spinnvliesdüse ohne das erfindungsgemäße Verfahren beträgt ein paar Stunden bis zu ein paar Tage. Dazu trägt auch der notwendige Austausch von feinen Filtern bei, welche vor den Spinnvliesdüsen positioniert sind und regelmäßig aufgrund von zu hohem Gegendruck gewechselt werden müssen. Durch das erfindungsgemäße Verfahren können die Filter gröber gewählt bzw. ganz weggelassen werden, da Verschmutzungen an der Spinnvliesdüsenoberfläche schnell beseitigt werden können. Die Betriebszeit der Spinnvliesdüsen kann dadurch um Wochen verlängert werden.

Die verlängerten Intervalle des Wechselns der Spinnvliesdüse führen zu einer Verringerung des Aufwands für den Ausbau, das Zerlegen, die Reinigung, die erneute Prüfung, den Zusammenbau und den erneuten Einbau der Spinnvliesdüse. Im Vergleich zu Düsen für die Erzeugung von Stapelfasern sind Spinnvliesdüsen deutlich größer. Mit Längen von 1 m bis 5 m pro Spinnvliesdüse und einer Masse von mehreren Tonnen inklusive Spinnmasseverteiler, ist jede Manipulation, sowie jeder Ein- und Ausbau der Spinnvliesdüse ein hoher Aufwand für das Betriebspersonal. Da es sich hierbei um sehr teure Präzessionswerkzeuge handelt, ist hohe Sorgfalt beim Ausbau, Zusammenbau und der Reinigung geboten.

Es hat sich als weiterer Vorteil des erfindungsgemäßen Verfahrens gezeigt, dass bei geplanten Produktumstellungen oder Stillständen die Spinnvliesdüse auch nach mehreren Tagen Stillstand, nicht ausgebaut werden muss. Beim erneuten Anfahren der Spinnmasse und Anspinnen der Spinnvliesdüse entstehen zwar zunächst Verschmutzungen auf der Spinnvliesdüsenoberfläche, doch auch diese werden nach dem erfindungsgemäßen Verfahren entfernt, und die Produktion kann fehlerfrei fortgesetzt werden.

Ein Vorteil des erfindungsgemäßen Verfahrens ist, dass es sich ohne großen Aufwand (da ja die Spinnvliesdüse nicht ausgebaut werden muss) beliebig oft wiederholen lässt.

In einer bevorzugten Ausführungsform ist das erfindungsgemäße Verfahren dadurch gekennzeichnet, dass es während des laufenden Herstellungsverfahrens und ohne Unterbrechung desselben durchgeführt wird.

Das erfindungsgemäße Verfahren ermöglicht, dass während des Reinigungsverfahrens das Herstellverfahren, insbesondere die Spinnmasseherstellung und Zufuhr zur Spinnvliesdüse nicht abgestellt werden muss. Insbesondere im Gegensatz zu einer Spinnvliesherstellung aus Kunststoffgranulat ist das Abstellen, Reinigen und wieder Anfahren der Spinnmasseversorgung und der Lösungsmittelrückgewinnung sehr aufwändig. Je konstanter die Spinnmasseversorgung betrieben werden kann, desto weniger operativer Aufwand entsteht und desto höher ist die Produktivität der Anlage.

Wenn das erfindungsgemäße Verfahren am Ende einer Produktionsrolle oder beim Umstellen von einer Rolle auf die nächste durchgeführt wird, dann können entweder die letzten Lagen der Rolle oder die gesamte Umstellrolle, in welcher die abgerissenen Verschmutzungen enthalten sind, verworfen werden. Anschließend kann mit einer sauberen Spinnvliesdüse, ohne Spinnfehler und Verschmutzungen weiter produziert werden. Daher ist ein laufendes Herstellungsverfahren ohne Unterbrechung möglich.

In einer bevorzugten Ausführungsform ist das erfindungsgemäße Verfahren dadurch gekennzeichnet, dass es die folgenden weiteren Schritte umfasst:
c. visuelle Kontrolle der Oberfläche der Spinnvliesdüse
d. Detektion von Verschmutzungen an der Oberfläche der Spinnvliesdüse
e. Positionierung einer Sprühvorrichtung in einer zum Besprühen der Verschmutzung geeigneten Position.

Prinzipiell ist aufgrund der Tatsache, dass das erfindungsgemäße Verfahren ohne Unterbrechung des Herstellverfahrens durchgeführt werden kann, eine Durchführung desselben ohne konkrete Kontroll- oder Steuerungsmaßnahmen möglich. So könnte das Verfahren z.B. völlig unabhängig von tatsächlich auftretenden Verschmutzungen lediglich in bestimmten zuvor festgesetzten Zeitabständen (oder z.B. jeweils bei einem Rollenwechsel) über die gesamte Oberfläche der Spinnvliesdüse durchgeführt werden.

Bevorzugt wird allerdings die Oberfläche der Spinnvliesdüse hinsichtlich des Auftretens von Verschmutzungen kontrolliert, um so zielgerichtet nur jene Teile der Spinnvliesdüse zu reinigen, die verschmutzt sind.

In dieser Ausführungsform ist das erfindungsgemäße Verfahren bevorzugt dadurch gekennzeichnet, dass die Durchführung zumindest einer der Schritte c) bis e), bevorzugt aller Schritte c) bis e) automatisch erfolgt.

Optional kann die Durchführung zumindest einer der Schritte c) bis e), bevorzugt aller Schritte c) bis e) natürlich auch manuell erfolgen.

Die Schritte c) bis e) werden bevorzugt vor den Schritten a) und b) ausgeführt.

In einer weiteren bevorzugten Ausführungsform ist das erfindungsgemäße Verfahren dadurch gekennzeichnet, dass das wasserhaltige Fluid aus der Gruppe bestehend aus Wasser, Dampf, dem wässrigen organischen Lösungsmittel oder Mischungen daraus ausgewählt ist.

Für die Reinigung der Spinnvliesdüsenoberfläche kann Dampf, bevorzugt Nassdampf verwendet werden.

In einer weiteren bevorzugten Ausführungsform ist das erfindungsgemäße Verfahren dadurch gekennzeichnet, dass abgelöste und abtransportierte Verschmutzungen aus dem Herstellungsverfahren ausgeschleust werden.

Erfindungsgemäß wird der feste Film der Verschmutzungen mit einem Mal durch den aus der Spinnvliesdüse austretenden Gasstrom mitgerissen und von der Spinnvliesdüsenoberfläche abgerissen. Die Spinnvliesdüsenoberfläche wird somit schlagartig gereinigt. Infolgedessen landet die Verschmutzung auf dem produzierten Spinnvliesstoff bzw. ist darin enthalten. Sie wird in Transportrichtung mitgeführt und bei Produktionsgeschwindigkeit mit dem Produkt aufgewickelt.

Erfindungsgemäß können sowohl einreihige Spaltdüsen (US3825380), mehrreihige Nadeldüsen (US4380570), oder bevorzugterweise die oben erwähnte Säulendüse (WO/2019/068764) mit Längen von beispielsweise 0,1 m bis 6 m gereinigt werden.

Das erfindungsgemäße Verfahren hat sich als besonders geeignet zur Reinigung von Säulendüsen erwiesen.

Der Cellulosedurchsatz pro Spinnvliesdüse kann 5 kg/h/m Düsenlänge bis 500 kg/h/m Düsenlänge betragen.

Der Cellulosegehalt in der Spinnmasse kann 4 % bis 17 %, bevorzugt 5 % bis 15 %, noch bevorzugter 6 % bis 14 % betragen.

Die Temperatur des Gasstroms kann 20 °C bis 200 °C, bevorzugt 60 °C bis 160 °C, noch bevorzugter 80 °C bis 140 °C betragen.

Der Gasstromdruck kann 0,05 bar bis 5 bar, bevorzugt 0,1 bar bis 3 bar, noch bevorzugter 0,2 bar bis 1 bar betragen.

Das organische Lösungsmittel kann ein tertiäres Aminoxid, bevorzugterweise N-Methylmorpholin-N-oxid (NMMO), oder eine ionische Flüssigkeit sein.

Die erfindungsgemäße Vorrichtung zur Durchführung des erfindungsgemäßen Verfahrens während des laufenden Herstellungsverfahrens und ohne Unterbrechung desselben umfasst eine Sprühvorrichtung, umfassend zumindest eine Sprühdüse für die Aufbringung des die Cellulose ausfällenden wasserhaltigen Fluids auf die Oberfläche der Spinnvliesdüse.

Die erfindungsgemäße Vorrichtung ist in einer bevorzugten Ausführungsform durch zumindest eine Positionierungsvorrichtung, um die Sprühvorrichtung an eine gewünschte Stelle zu bewegen, gekennzeichnet.

In einer Produktionsanlage können mehrere Spinnvliesdüsen in Produktionsrichtung in Serie geschaltet sein, wobei jede davon zumindest eine erfindungsgemäße Vorrichtung zum Reinigen aufweist.

Als Sprühdüse kann eine Einstoff- oder Mehrstoffdüse, noch bevorzugter eine Zweistoffdüse verwendet werden.

Eine Einstoffdüse kann zum Beispiel zur Verwendung von Wasser, wässrigem organischen Lösungsmittel oder Dampf als Cellulose ausfällendes wasserhaltiges Fluid eingesetzt werden.

Für den Betrieb von Einstoffdüsen ist bevorzugt zumindest eine Flüssigkeitspumpe bzw. eine Dampfzuführungsleitung vorgesehen.

Der Druck der Einstoffdüse kann 1 bar bis 50 bar betragen. Dies ermöglicht eine Einstellung der Feinheit des Sprühnebels, der Flüssigkeit- bzw. Dampfmenge und des Impulses während der Reinigung.

Die Zweistoffdüse kann zum Beispiel zur Verwendung von Wasser bzw. Dampf und wässrigem organischen Lösungsmittel als Cellulose ausfällendes wasserhaltiges Fluid eingesetzt werden.

Der Druck der Zweistoffdüse kann bevorzugt 0,5 bar bis 20 bar betragen und kann fluid- und gasseitig verändert werden. Dies ermöglicht eine Einstellung der Feinheit des Sprühnebels, der Flüssigkeit- bzw. Dampfmenge und des Impulses während der Reinigung.

Für den Betrieb von Zweistoffdüsen ist im Vergleich zu den Einstoffdüsen zusätzlich zur Flüssigkeitsleitung eine Druckluftleitung zum Zerstäuben der Flüssigkeit vorgesehen.

Die Positionierungsvorrichtung kann eine Linearachse, bevorzugt eine Schiene, sein, auf welcher sich die Sprühdüse entlang der Längsseite der Spinnvliesdüse bewegen und genau positionieren lässt.

Die erfindungsgemäße Vorrichtung kann durch die Positionierungsvorrichtung an eine Längsseite der Spinnvliesdüse bewegt werden, bevorzugt jedoch auf beide Längsseiten, um den Reinigungseffekt zu verstärken.

Es können pro Spinnvliesdüse eine oder mehrere Positionierungsvorrichtungen verwendet werden. Jede Positionierungsvorrichtung steuert eine oder mehrere Sprühdüsen.

Durch die Steuerung von mehreren Sprühdüsen durch eine Positionierungsvorrichtung können zeitgleich größere Bereiche gereinigt werden. In einer Ausführungsform befindet sich entlang der Längsseite der Spinnvliesdüsen zumindest eine durchgehende Schiene mit Sprühdüsen, wodurch die gesamte Länge der Spinnvliesdüsen zeitgleich gereinigt werden kann.

Die Positionierungsvorrichtung kann eine Einstellung des Abstands zwischen der Sprühdüse und der Spinnvliesdüse ermöglichen.

Die Positionierungsvorrichtung kann eine Änderung des Winkels, mit welchem die Sprühdüse auf die Spinnvliesdüse gerichtet ist, ermöglichen.

Die Positionierungsvorrichtung kann durch zumindest einen Elektromotor betrieben werden.

Die Positionierungsvorrichtung kann ferngesteuert werden.

In einer bevorzugten Ausführungsform umfasst die erfindungsgemäße Vorrichtung weiters eine Detektiervorrichtung zur Detektion der Verschmutzungen.

Die Detektiervorrichtung kann eine Kamera auf der Positionierungsvorrichtung umfassen. Diese kann neben der Sprühdüse angeordnet sein. Mithilfe der Kamera wird die Oberfläche der Spinnvliesdüse traversierend geprüft, woraufhin die Sprühvorrichtung an eine zum Besprühen der Verschmutzung geeignete Position gebracht werden kann. Dies kann sowohl manuell als auch automatisch erfolgen.

Bevorzugt ist vorgesehen, dass für jede Spinnvliesdüse zumindest eine erfindungsgemäße Vorrichtung pro Seite ausgeführt (entweder in Produktionsrichtung vor der Spinnvliesdüse oder nach der Spinnvliesdüse) ist.

Wenn die Vorrichtung in Produktionsrichtung vor der Spinnvliesdüse angeordnet ist, so wird die Spinnvliesdüse von der Sprühvorrichtung in Produktionsrichtung besprüht. Wenn die Vorrichtung in Produktionsrichtung nach der Spinnvliesdüse angeordnet ist, so wird die Spinnvliesdüse von der Sprühvorrichtung gegen die Produktionsrichtung besprüht.

Es sind auch Mischungen dieser beiden Varianten möglich.

Besonders bevorzugt ist die Vorrichtung so ausgeführt, dass sie mithilfe einer elektrisch verstellbaren Positionierungsvorrichtung und einer Detektiervorrichtung umfassend einer Kamera Verschmutzungen automatisch erkennt, die Sprühdüse in eine zum Besprühen der Verschmutzung geeigneten Position positioniert und die Spinnvliesdüse mit kurzen Sprühintervallen des die Cellulose ausfällenden wasserhaltigen Fluids reinigt.

### Detaillierte Beschreibung der Figuren

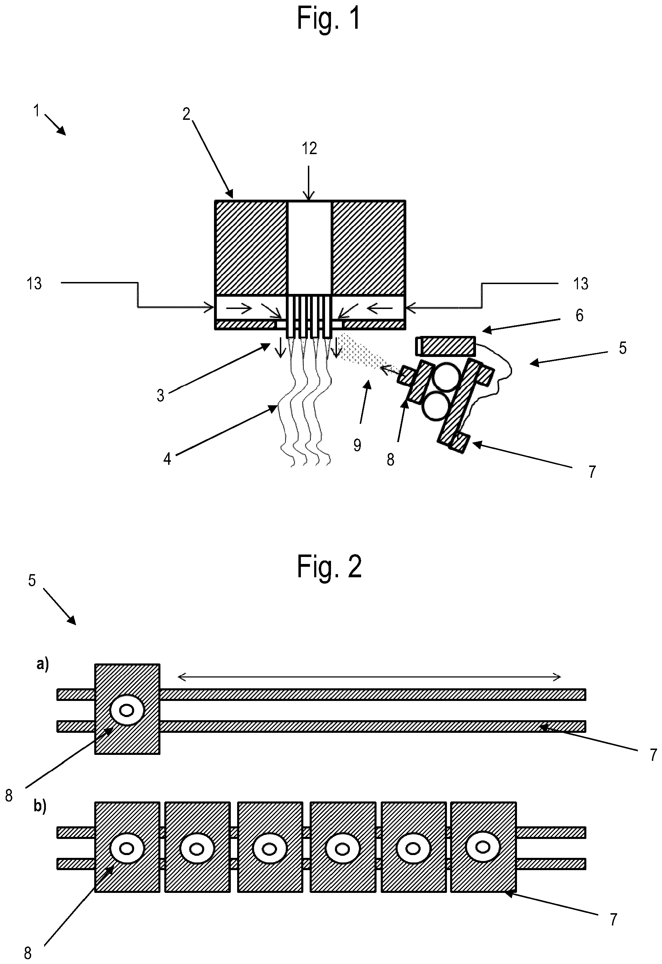

Fig. 1 zeigt eine Ausführungsform der erfindungsgemäßen Vorrichtung unter der Spinnvliesdüse 2 in Seitenansicht 1, wobei die Spinnvliesdüse 2 aus Spinnmasse 12 mithilfe von heißer eintretender Luft 13 und heißer schnell austretender Primärluft Spinnvliesfilamente 4 erzeugt. Die Spinnvliesdüsenoberfläche 3 wird mithilfe der erfindungsgemäßen Vorrichtung 5 kontrolliert und gegebenenfalls gereinigt. Die erfindungsgemäße Vorrichtung kann beispielsweise mit Hilfe einer Kamera 6 Verschmutzungen erkennen. Danach kann die Sprühdüse 8 mit Hilfe der Positionierungsvorrichtung 7 zur verschmutzten Oberfläche der Spinnvliesdüse gebracht werden und die Oberfläche der Spinnvliesdüse mit Hilfe des Cellulose ausfällenden wasserhaltigen Fluids 9 gereinigt werden.

Fig. 2a zeigt, dass auf einer Positionierungsvorrichtung 7 zumindest eine Sprühdüse 8 angebracht sein kann, welche traversierend entlang der Spinnvliesdüse bewegt werden kann.

Fig. 2b zeigt, dass mehrere Sprühdüsen 8 auf einer Positionierungsvorrichtung 7 angebracht sein können.

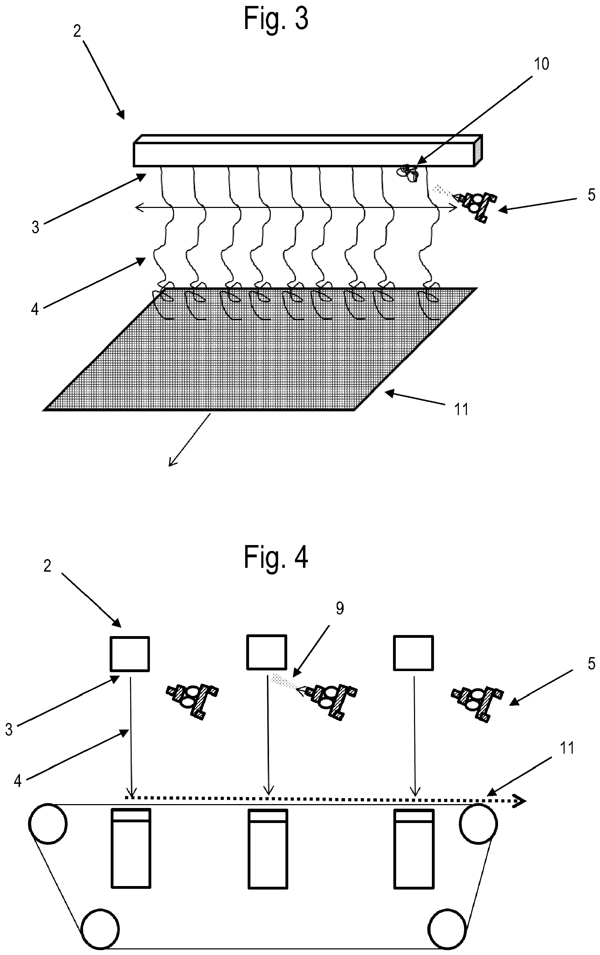

Fig. 3 zeigt perspektivisch eine Ausführungsform des erfindungsgemäßen Verfahrens, wobei die erfindungsgemäße Vorrichtung 5 traversierend unter der Spinnvliesdüse 2 für die Abreinigung von Verschmutzungen 10 verwendet werden kann, während die Herstellung des Spinnvlieses 11 nicht unterbrochen wird.

Fig. 4 zeigt eine Ausführungsform des erfindungsgemäßen Verfahrens in Seitenansicht, wobei mehrere Spinnvliesdüsen 2 in Serie geschalten sind. Für jede Spinnvliesdüse 2 ist zumindest eine erfindungsgemäße Vorrichtung 5 pro Seite (im hier dargestellten Fall in Produktionsrichtung gesehen jeweils nach der Spinnvliesdüse) ausgeführt. In dem hier dargestellten Fall wird bei Durchführung des erfindungsgemäßen Verfahrens die Spinnvliesdüse von der Sprühvorrichtung gegen die Produktionsrichtung besprüht.

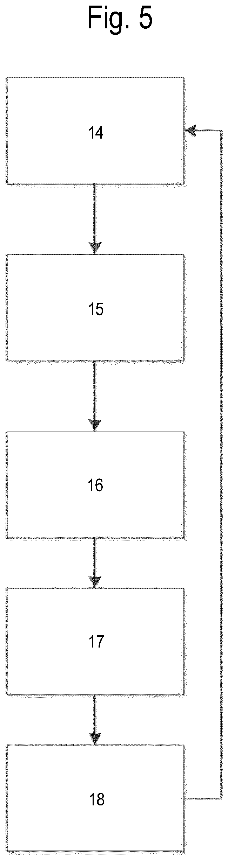

Fig. 5 zeigt schematisch eine bevorzugte Ausführungsform des erfindungsgemäßen Verfahrens für die Reinigung von Spinnvliesdüsen während der Herstellung von cellulosischem Spinnvlies, umfassend:
visuelle Kontrolle der Oberfläche der Spinnvliesdüse (14, entspricht Schritt (c)) Detektion von Verschmutzungen an der Oberfläche der Spinnvliesdüse (15, entspricht Schritt (d))
Positionierung der Sprühvorrichtung in einer zum Besprühen der Verschmutzung geeigneten Position und Besprühen der Verschmutzung mittels eines die Cellulose ausfällenden wasserhaltigen Fluids (16, Schritte (e) und (a)) Koagulation der Cellulose auf der Oberfläche der Spinnvliesdüse (17) Ablösen und Abtransport der Verschmutzung mittels des Gasstroms (18, Schritt (b))
wobei die Spinnvliesherstellung dabei bevorzugt nicht unterbrochen wird. Anschließend an Schritt 18 kann das Verfahren beginnend mit Schritt 14 wiederholt werden.

## Patentansprüche

1. Verfahren zur Reinigung einer Spinnvliesdüse zur Herstellung von cellulosischem Spinnvlies aus einer Lösung von Cellulose in einem wässrigen organischen Lösungsmittel mittels Extrusion der Lösung durch Düsenlöcher der Spinnvliesdüse zur Bildung von Filamenten und Verstrecken der Filamente in Extrusionsrichtung mittels eines Gasstroms, bei welchem Verfahren an der Oberfläche der Spinnvliesdüse Cellulose enthaltende Verschmutzungen anfallen, umfassend die Schritte:
a) Besprühen der Verschmutzung mittels eines die Cellulose ausfällenden wasserhaltigen Fluids
b) Ablösen und Abtransport der Verschmutzung mittels des Gasstroms.

2. Verfahren gemäß Anspruch 1, **dadurch gekennzeichnet, dass** es während des laufenden Herstellungsverfahrens und ohne Unterbrechung desselben durchgeführt wird.

3. Verfahren gemäß Anspruch 1 oder 2, umfassend die weiteren Schritte:
c) visuelle Kontrolle der Oberfläche der Spinnvliesdüse
d) Detektion von Verschmutzungen an der Oberfläche der Spinnvliesdüse
e) Positionierung einer Sprühvorrichtung in einer zum Besprühen der Verschmutzung geeigneten Position.

4. Verfahren gemäß Anspruch 3, **dadurch gekennzeichnet, dass** die Durchführung zumindest einer der Schritte c) bis e), bevorzugt aller Schritte c) bis e) automatisch erfolgt.

5. Verfahren gemäß einem der vorhergehenden Ansprüche, **dadurch gekennzeichnet, dass** das wasserhaltige Fluid aus der Gruppe bestehend aus Wasser, Dampf, dem wässrigen organischen Lösungsmittel oder Mischungen daraus ausgewählt ist.

6. Verfahren gemäß einem der vorhergehenden Ansprüche, **dadurch gekennzeichnet, dass** abgelöste und abtransportierte Verschmutzungen aus dem Herstellungsverfahren ausgeschleust werden.

7. Vorrichtung zur Durchführung eines Verfahrens gemäß Anspruch 2, umfassend eine Sprühvorrichtung, umfassend zumindest eine Sprühdüse für die Aufbringung des die Cellulose ausfällenden wasserhaltigen Fluids auf die Oberfläche der Spinnvliesdüse.

8. Vorrichtung gemäß Anspruch 7, **gekennzeichnet durch**
zumindest eine Positionierungsvorrichtung, um die Sprühvorrichtung an eine gewünschte Stelle zu bewegen.

9. Vorrichtung gemäß einem der Ansprüche 7 oder 8, weiters umfassend eine Detektiervorrichtung zur Detektion der Verschmutzungen.

## Claims

1. A method for cleaning a spunbonding spinneret for the production of cellulosic spunbonded nonwoven from a solution of cellulose in an aqueous organic solvent by extruding the solution through nozzle holes of the spunbonding spinneret to form filaments and stretching the filaments in the direction of extrusion by means of a gas stream, during which method contaminations containing cellulose will accumulate on the surface of the spunbonding spinneret, comprising the steps of:
a) spraying the contamination with an aqueous fluid precipitating the cellulose
b) detaching and carrying away the contamination by means of the gas stream.

2. A method according to claim 1, **characterized in that** it is carried out during the ongoing manufacturing process and without an interruption thereof.

3. A method according to claim 1 or 2, comprising the further steps:
c) visual inspection of the surface of the spunbonding spinneret
d) detection of contaminants on the surface of the spunbonding spinneret
e) positioning of a spray device at a position suitable for spraying the contamination.

4. A method according to claim 3, **characterized in that** at least one of steps c) to e), preferably all of steps c) to e), is/are carried out automatically.

5. A method according to any of the preceding claims, **characterized in that** the aqueous fluid is selected from the group consisting of water, water vapour, the aqueous organic solvent or mixtures thereof.

6. A method according to any of the preceding claims, **characterized in that** contaminants that have been detached and carried away are expelled from the manufacturing process.

7. A device for performing a method according to claim 2, comprising a spray device comprising at least one spray nozzle for applying the aqueous fluid precipitating the cellulose onto the surface of the spunbonding spinneret.

8. A device according to claim 7, **characterized by** at least one positioning device for moving the spray device to a desired location.

9. A device according to any of claims 7 or 8, furthermore comprising a detection device for detecting the contaminations.

## Revendications

1. Dispositif de nettoyage d'une buse de non-tissé pour la fabrication de non-tissé cellulosique à partir d'une solution de cellulose dans un solvant organique aqueux au moyen de l'extrusion de la solution à travers des orifices de buse de la buse de non-tissé pour former des filaments et de l'étirage des filaments dans une direction d'extrusion au moyen d'un flux de gaz, procédé au cours duquel des impuretés contenant de la cellulose apparaissent à la surface de la buse de non-tissé et qui comprend les étapes suivantes :
a) aspersion des impuretés avec un fluide aqueux précipitant la cellulose et
b) détachement et évacuation des impuretés au moyen du flux de gaz.

2. Procédé selon la revendication 1, **caractérisé en ce qu'**il est exécuté pendant le processus de fabrication en cours et sans interrompre celui-ci.

3. Procédé selon la revendication 1 ou 2, comprenant les étapes supplémentaires suivantes :
c) contrôle visuel de la surface de la buse de non-tissé,
d) détection des impuretés à la surface de la buse de non-tissé et
e) positionnement d'un dispositif d'aspersion dans une position appropriée pour l'aspersion des impuretés.

4. Procédé selon la revendication 3, **caractérisé en ce que** l'exécution d'au moins une des étapes c) à e), de préférence de toutes les étapes c) à e), se fait automatiquement.

5. Procédé selon une des revendications précédentes, **caractérisé en ce que** le fluide aqueux est choisi parmi le groupe constitué par l'eau, la vapeur, le solvant organique aqueux ou des mélanges de ceux-ci.

6. Procédé selon une des revendications précédentes, **caractérisé en ce que** les impuretés détachées et évacuées sont éliminées du processus de fabrication.

7. Dispositif pour la mise en oeuvre du procédé selon la revendication 2, comprenant un dispositif d'aspersion, comprenant au moins une buse d'aspersion pour l'application du fluide aqueux précipitant la cellulose sur la surface de la buse de non-tissé.

8. Dispositif selon la revendication 7, **caractérisé par** au moins un dispositif de positionnement pour déplacer le dispositif d'aspersion vers un emplacement souhaité.

9. Dispositif selon une des revendications 7 ou 8, comprenant en outre un dispositif de détection pour la détection des impuretés.
